# EUROPÄISCHE PATENTSCHRIFT

(11) **EP 2 262 070 B1**
(45) Veröffentlichungstag und Bekanntmachung des Hinweises auf die Patenterteilung: **11.02.2015**
(21) Anmeldenummer: 10005727.2
(22) Anmeldetag: 02.06.2010
(51) Int. Cl.: H02G 3/04

(54) **Spannvorrichtung für Versorgungssäulen und Raumsäulen mit Anschlüssen und Geräten für elektrische Energie, Telekommunikation und/oder Daten**
Tensioning device for supply columns and room columns with connections and devices for electrical energy, telecommunications and/or data
Dispositif de serrage pour colonnes d'alimentation et colonnes spatiales doté de raccordements et d'appareils destinés à l'énergie électrique, la télécommunication et/ou les données

(30) Priorität: 09.06.2009 DE 202009008037 U
(43) Veröffentlichungstag der Anmeldung: 15.12.2010
(73) Patentinhaber: Tehalit GmbH, 67716 Heltersberg (DE)
(72) Erfinder: Eberle, Patrick, 66292 Riegelsberg (DE)
(74) Vertreter: Nuss, Laurent

(56) Entgegenhaltungen:
- EP-A1- 1 816 717
- FR-A1- 2 757 694
- US-A- 4 164 618

## Beschreibung

Die vorliegende Erfindung betrifft eine Spannvorrichtung für Versorgungssäulen oder Raumsäulen mit Anschlüssen und Geräten für elektrische Energie, Telekommunikation und/oder Daten gemäß dem Oberbegriff des Anspruchs 1. Die Erfindung betrifft ferner eine Versorgungssäule oder Raumsäule zur Versorgung von Büro- und sonstigen Räumen mit Anschlüssen und Geräten für elektrische Energie, Telekommunikation und/oder Daten, umfassend einen Korpus sowie Anschlüsse und/oder Geräte für elektrische Energie, Telekommunikation und/oder Daten, gekennzeichnet durch eine Spannvorrichtung, wie in den nachfolgenden Ansprüchen beansprucht.

Versorgungs- oder Raumsäulen, die zwischen Boden und Decke eines Büro- oder sonstigen Raumes verspannt werden, sind in unterschiedlichen Ausführungen bekannt und beispielsweise in der EP 1 335 462 A, FR 2 757 694 A, EP 0 828 326 C, US 4 252 989, GB 2 213 847 A oder EP 0 958 640 B beschrieben. Allen diesen Konstruktionen ist gemeinsam ein Säulenkorpus, ein Fuß, mit dem die Versorgungs- oder Raumsäule auf dem Boden steht, ein Kopf, der sich an die Raumdecke anlegt, und eine Druckfeder, welche für die nötige Anpresskraft sorgt und in begrenztem Umfang auch einen Abstandsausgleich ermöglicht.

Zum Spannen der Spannfeder sind unterschiedliche Konstruktionen bekannt. Überwiegend werden auf Gewindestangen laufende Gewindemuttern eingesetzt. Bekannt sind aber auch Kniehebelspanner und Exzenterhebel.

Um Abstandsdifferenzen zwischen Fußboden und Decke ausgleichen zu können, besitzen manche Versorgungssäulen einen Schlitten, der im Korpus der Versorgungssäule untergebracht ist und nach Verschieben in die erforderliche Position dort dauerhaft fixiert wird. Hierzu werden gewöhnliche Gewindeschrauben verwendet.

In der EP 1 816 717 A wird eine Spannvorrichtung für eine Versorgungs- oder Raumsäule beschrieben, bei der die Fixierung des Schlittens im Korpus der Versorgungssäule und das anschließende Spannen der Spannfeder mit einem einzigen Handgriff erfolgt. Durch die Dimensionierung der Konstruktionselemente wird dafür gesorgt, dass zunächst der Schlitten fixiert und danach die Spannfeder gespannt wird. Der Installateur fährt dabei zunächst bei gelöster Spann- und Druckvorrichtung den Schlitten so lange nach oben, bis sich der Kopf gegen die Raumdecke legt. Anschließend muss er den Schwenkhebel in die Verschlussstellung schwenken und die Raumsäule sitzt mit der richtigen Spannung perfekt zwischen Boden und Decke fest.

Bei vielen der bekannten Spannvorrichtungen für Versorgungs- oder Raumsäulen ist ein erheblicher Kraftaufwand notwendig, um die Druckfeder zu spannen. Oftmals muss der Installateur dabei mit beiden Händen den Schwenkhebel nach oben drücken. Bei solchen Versorgungssäulen werden aus diesem Grund zwei Personen benötigt, wobei eine Person die Säule hält, während die andere Person den Schlitten fixiert.

Ferner ist bei vielen der bekannten Konstruktionen der für die Spannvorrichtung erforderliche Platzbedarf und Teilebedarf nachteilig. Die Versorgungs- oder Raumsäule sollte primär ausreichenden Platz für die zu installierenden Geräte oder Kabel bieten. Da die Spannvorrichtung lediglich der Montage der Säule dient, sollte sie möglichst platzsparend ausfallen.

Es ist daher Aufgabe der vorliegenden Erfindung, eine Spannvorrichtung für Versorgungssäulen oder Raumsäulen bereit zu stellen, welche zum einen platzsparend und kostengünstig in der Herstellung ist und zum anderen die Montage mit einer Hand ermöglicht.

Diese Aufgabe wird gelöst durch eine Spannvorrichtung mit den Merkmalen des Anspruchs 1.

Bevorzugte Ausführungsformen finden sich in den Unteransprüchen wieder.

Die erfindungsgemäße Spannvorrichtung besteht, wie bekannte Spannvorrichtungen auch, aus einer Schubstange, wenigstens einer Druckfeder, einem Druckkolben, einem Schubrohr und einer Stützplatte zum Abstützen der Versorgungs- oder Raumsäule gegen die Decke. Zum Spannen der Druckfeder ist erfindungsgemäß ein Zahnrad vorgesehen, dessen Zahnradritzel formschlüssig in ein Führungsprofil an der Versorgungs- oder Raumsäule greifen. Das Führungsprofil ist vorzugsweise eine Führungsfurche, welche in einem fixierten Aluminiumprofil ausgebildet ist, also bevorzugt einem weicheren Material als das der Zahnritzel. Das Aluminiumprofil, in welches die Zahnradritzel greifen, kann beispielsweise ein fester Schlitten, ein Halteelement oder direkt ein Teil des Korpus der Versorgungs- oder Raumsäule sein. Die Zahnradritzel pressen sich beim Hochdrücken des Schwenkhebels in das Material der Führungsfurche und drücken dadurch die Schubstange nach oben.

In einer bevorzugten Ausführungsform ist das Zahnrad mit zweireihigen Zahnradritzeln ausgerüstet (Doppelritzel). Dabei ist es bevorzugt, dass die Zahnradritzel in den beiden Reihen versetzt zueinander angeordnet sind. Dadurch verläuft der Greifvorgang der einzelnen Ritzel gleichförmiger, weil die einzelnen Ritzel in den beiden Reihen nacheinander und abwechselnd in das Material greifen. Ferner können mehrere kleinere Ritzel verwendet werden, d.h. die Dichte der Ritzel wird erhöht, ohne dass die einzelnen Ritzel zu klein ausfallen und den mechanischen Beanspruchungen nicht mehr Stand halten. Die Anordnung als Doppelritzel ist vorteilhafter als beispielsweise größere Ritzel oder viele kleine Ritzel, die lediglich in einer Reihe angeordnet sind. Durch die versetzten Doppelritzel wird der Kraftaufwand beim Spannen der Druckfeder erheblich reduziert. Vorzugsweise sind die Zahnradritzel des Zahnrades nur bereichsweise ausgebildet und nicht umlaufend.

Das Zahnrad selbst ist über einen Stift in der Schubstange gelagert. Dabei ist vorzugsweise vorgesehen, dass das Zahnrad innerhalb eines Schlitzes in der Schubstange gelagert ist. Der Schlitz dient gleichzeitig zur Aufnahme des Schwenkhebels, wenn dieser in die Verschlussstellung nach oben geklappt ist. An der Unterseite der Schubstange ist eine Ausnehmung eingebracht, durch welche die einzelnen Zahnradritzel in das darunter liegende Material (z.B. Aluminiumprofil) greifen können.

Das Kopfstück der Schubstange ist vorzugsweise durch eine weitere, unten angeordnete Druckfeder von der Schubstange getrennt. Diese Feder drückt auch den Verriegelungsschieber für den Schwenkhebel nach unten. Das Kopfstück lässt sich über ein Drehknopf arretieren, der formschlüssig in das Aluminiumprofil greift. Der Druckkolben verläuft innerhalb der ersten Druckfeder und wird von einem Endstück abgeschlossen. Auf das Endstück wird das Schubrohr aufgesetzt, welches über Verbindungselemente mit der Stütz- oder Abschlussplatte, welche sich letztendlich gegen die Decke abstützt, verbunden wird.

Zum Spannen der oberen Druckfeder wird der Schwenkhebel nach oben gedrückt. Dadurch greifen die einzelnen Zahnradritzel in das weichere Material der Führungsfurche des darunter liegenden fixierten Trägers. Wenn sich der Schwenkhebel in der Verschlussstellung befindet, sitzt die Raumsäule bzw. Versorgungssäule mit der richtigen Spannung fest zwischen Boden und Decke. Zum Arretieren des Schwenkhebels ist ein Verriegelungsschieber vorgesehen. Der Schwenkhebel besitzt zum Arretieren an dessen Ende ein Verschlussprofil (z.B. eine hakenförmige Nase), welches in ein entsprechendes Gegenprofil des Verriegelungsschiebers greift. Ein versehentliches Lösen des Schwenkhebels wird dadurch verhindert. Zur Freigabe des Schwenkhebels wird der Verriegelungsschieber nach oben gedrückt.

Die erfindungsgemäße Konstruktion hat den Vorteil, dass der Installateur mit einer Hand den Schwenkhebel nach oben drücken kann. Zur Ausrichtung der Schubstange ist vorzugsweise eine Wasserwaage (Libelle) vorgesehen. Die Versorgungs- oder Raumsäule lässt sich dadurch sicher und präzise aufstellen.

Ein weiterer Vorteil gegenüber bekannten Konstruktionen ist in der platzsparenden Anordnung zu sehen. Ferner ist die erfindungsgemäße Spannvorrichtung kostengünstig in der Herstellung, da der Teilebedarf geringer ausfällt (z.B. Wegfall eines Exzenters).

Die vorliegende Erfindung wird in den nachfolgenden Zeichnungen näher erläutert. Es zeigen jeweils schematisch
- Fig. 1: eine isometrische Darstellung der Spannvorrichtung mit einer Ausschnittsvergrößerung der Schwenkkonstruktion,
- Fig. 2: die in Fig. 1 gezeigte Ausführungsform von der Rückseite.

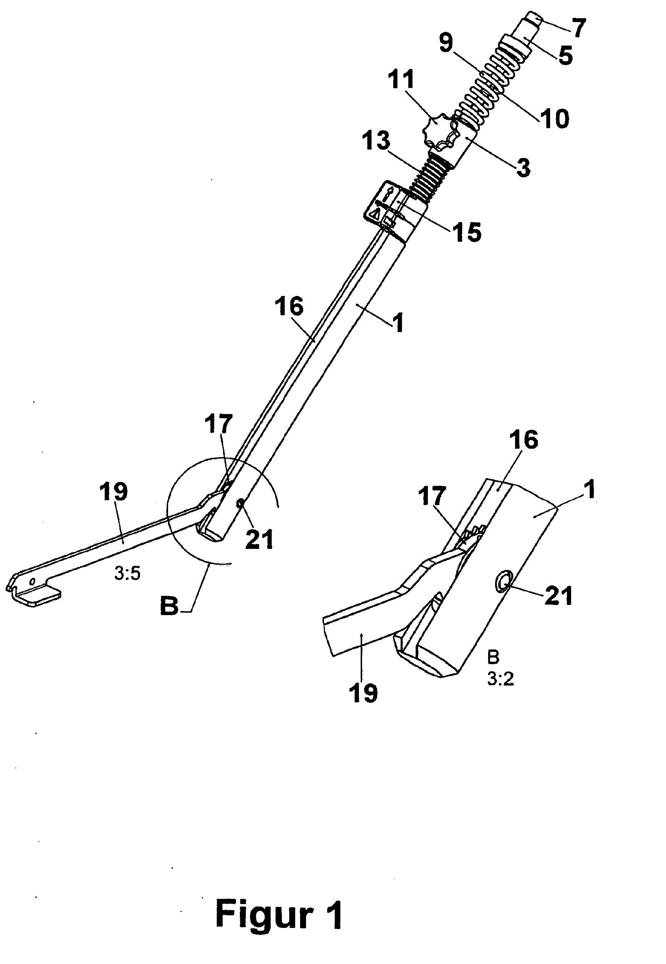

In Fig. 1 erkennt man den prinzipiellen Aufbau der erfindungsgemäßen Spannvorrichtung. Diese besteht aus einer Schubstange 1, einer Druckfeder 9 sowie einem Druckkolben 10, der innerhalb der Druckfeder 9 verläuft. In der Schubstange 1 ist ein zentraler Schlitz 16 ausgebildet. In diesem ist am Fußende ein Zahnrad 17 über einen Stift 21 als Achse gelagert. Ferner dient dieser Schlitz 16 der Aufnahme des Schwenkhebels 19 in der Verschlussstellung.

Das Zahnrad 17 besteht in der gezeigten Ausführungsform aus zweireihigen versetzten Zahnradritzel (Doppelritzel; vgl. Ausschnittsvergrößerung B). Das Zahnrad 17 wird über den Schwenkhebel 19 betätigt. Beim Hochdrücken des Schwenkhebels 19 greifen die einzelnen Zahnradritzel nacheinander in eine zentrale Führungsfurche des Unterteils der Versorgungs- oder Raumsäule (z.B. Aluminiumprofil) versenkt. Durch die versetzten Doppelritzel wird eine hohe Ritzeldichte erreicht, so dass der Kraftaufwand zum Spannen der Druckfeder 9 vermindert werden kann.

Ferner erkennbar in der Figur ist ein abgesetztes Kopfteil 3 der Schubstange 1, welches von der Druckfeder 9 nach unten gehalten wird. Das Kopfteil 3 lässt sich über einen Drehknopf 11 arretieren. Der Drehknopf 11 greift hierzu in das Aluminiumprofil.

Zwischen dem Kopfteil 3 und der Schubstange 1 befindet sich eine weitere untere Druckfeder 13. Diese drückt den Verriegelungsschieber 15 nach unten, welcher zum Arretieren des Schwenkhebels 19 in der Verschlussstellung vorgesehen ist. Am Ende des Schwenkhebels 19 befindet sich ein Verschlussprofil, welches mit dem entsprechenden Gegenprofil des Verriegelungsschiebers 15 kooperiert. Zur Freigabe des Schwenkhebels 19 wird der Verriegelungsschieber 15 nach oben gedrückt.

Am Ende des Druckkolbens 10 ist ein Endstück 5 zu erkennen. Über ein Verschlusselement 7 erfolgt die Verbindung an ein (nicht gezeigtes) Schubrohr. Am Kopfende des Schubrohrs befindet sich üblicherweise eine Stütz- oder Abschlussplatte für die Decke.

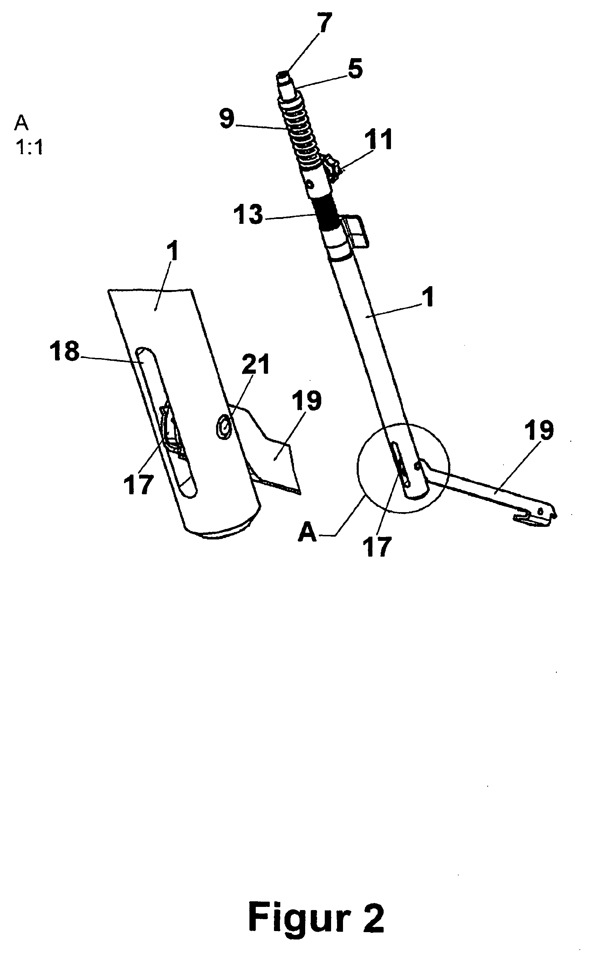

In Fig. 2 erkennt man die Rückseite der erfindungsgemäßen Spannvorrichtung. In der Ausschnittsvergrößerung A erkennt man einen an der Rückseite der Schubstange 1 angebrachte Ausnehmung 18. Die Zahnrad ritzel des Zahnrads 17 greifen durch diese in das darunter liegende Aluminiumprofil. Beim Hochschwenken des Schwenkhebels 19 greifen die Zahnradritzel nacheinander formschlüssig in die (nicht gezeigte) Führungsfurche des Aluminiumprofils, wodurch die Schubstange 1 nach oben gedrückt wird.

## Patentansprüche

1. Spannvorrichtung für Versorgungs- oder Raumsäulen mit Anschlüssen und Geräten für elektrische Energie, Telekommunikation und/oder Daten, umfassend
- eine Schubstange (1),
- eine Druckfeder (9),
- einen Druckkolben (10),
- einen Schwenkhebel (19) zum Spannen der Druckfeder (9),
**dadurch gekennzeichnet, dass** an der Schubstange (1) ein Zahnrad (17) derart gelagert ist, dass beim Betätigen des Schwenkhebels (19) die Zahnradritzel in ein Führungsprofil der Versorgungs- bzw. Raumsäule greifen, wodurch die Druckfeder (9) gespannt und die Schubstange (1) nach oben gedrückt wird.

2. Spannvorrichtung nach Anspruch 1, **dadurch gekennzeichnet, dass** das Zahnrad (17) zweireihige Zahnradritzel aufweist.

3. Spannvorrichtung nach Anspruch 2, **dadurch gekennzeichnet, dass** die zweireihigen Zahnradritzel versetzt zueinander angeordnet sind.

4. Spannvorrichtung nach einem der vorherigen Ansprüche, **dadurch gekennzeichnet, dass** das Zahnrad (17) über einen Stift (21) in der Schubstange (1) gelagert ist.

5. Spannvorrichtung nach einem der vorherigen Ansprüche, **dadurch gekennzeichnet, dass** die Schubstange (1) einen zentralen Schlitz (16) aufweist.

6. Spannvorrichtung nach einem der vorherigen Ansprüche, **dadurch gekennzeichnet, dass** die Zahnradritzel des Zahnrads (17) durch eine rückseitige Ausnehmung (18) der Schubstange (1) durchgreifen.

7. Spannvorrichtung nach einem der vorherigen Ansprüche, **dadurch gekennzeichnet, dass** das Kopfteil (3) der Schubstange (1) von einer weiteren Druckfeder (13) getrennt ist.

8. Spannvorrichtung nach einem der vorherigen Ansprüche, **dadurch gekennzeichnet, dass** das Kopfteil (3) über einen Drehknopf (11) arretierbar ist.

9. Spannvorrichtung nach einem der vorherigen Ansprüche, **dadurch gekennzeichnet, dass** am Kopfende der Druckfeder (9) ein Endstück (5) angebracht ist.

10. Spannvorrichtung nach einem der vorherigen Ansprüche, **dadurch gekennzeichnet, dass** der Schwenkhebel (19) über einen Verriegelungsschieber (15) arretierbar ist.

11. Spannvorrichtung nach einem der vorherigen Ansprüche, **dadurch gekennzeichnet, dass** das Führungsprofil eine Führungsfurche eines Aluminiumprofils ist.

12. Versorgungssäule oder Raumsäule zur Versorgung von Büro- und sonstigen Räumen mit Anschlüssen und Geräten für elektrische Energie, Telekommunikation und/oder Daten, umfassend einen Korpus sowie Anschlüsse und/oder Geräte für elektrische Energie, Telekommunikation und/oder Daten, umfassend eine Spannvorrichtung nach einem der Ansprüche 1 bis 11.

## Claims

1. Tensioning device for supply or room columns with connections and devices for electrical energy, telecommunications and/or data, comprising
- a push rod (1),
- a compression spring (9),
- a pressure piston (10),
- a pivoting lever (19) for tensioning the compression spring (9),
**characterized in that** a toothed wheel (17) is mounted on the push rod (1) in such a way that, when actuating the pivoting lever (19), the toothed-wheel pinions engage in a guide profile of the supply or room column, with the result that the compression spring (9) is tensioned and the push rod (1) is pressed upwards.

2. Tensioning device according to Claim 1, **characterized in that** the toothed wheel (17) has two-row toothed-wheel pinions.

3. Tensioning device according to Claim 2, **characterized in that** the two-row toothed-wheel pinions are arranged offset with respect to one another.

4. Tensioning device according to one of the preceding claims, **characterized in that** the toothed wheel (17) is mounted in the push rod (1) via a pin (21).

5. Tensioning device according to one of the preceding claims, **characterized in that** the push rod (1) has a central slot (16).

6. Tensioning device according to one of the preceding claims, **characterized in that** the toothed-wheel pinions of the toothed wheel (17) engage through a rear cutout (18) in the push rod (1).

7. Tensioning device according to one of the preceding claims, **characterized in that** the head part (3) of the push rod (1) is separated by a further compression spring (13).

8. Tensioning device according to one of the preceding claims, **characterized in that** the head part (3) can be locked via a rotary knob (11).

9. Tensioning device according to one of the preceding claims, **characterized in that** an end piece (5) is mounted at the head end of the compression spring (9).

10. Tensioning device according to one of the preceding claims, **characterized in that** the pivoting lever (19) can be locked via a locking slide (15).

11. Tensioning device according to one of the preceding claims, **characterized in that** the guide profile is a guide groove of an aluminium profile.

12. Supply column or room column for supplying offices and other rooms with connections and devices for electrical energy, telecommunications and/or data, comprising a body and connections and/or devices for electrical energy, telecommunications and/or data, comprising a tensioning device according to one of Claims 1 to 11.

## Revendications

1. Dispositif de serrage pour des colonnes d'alimentation ou de raccordement dotées de branchements et d'appareils destinés à de l'énergie électrique, des télécommunications et/ou des données, comprenant
- une bielle (1),
- un ressort de compression (9),
- un piston de compression (10),
- un levier pivotant (19) pour tendre le ressort de compression (9),
**caractérisé en ce qu'**un engrenage (17) est monté sur la bielle (1) de telle sorte que, lors de l'actionnement du levier pivotant (19), les pignons de l'engrenage s'engagent dans un profil de guidage de la colonne d'alimentation ou de raccordement, de sorte que le ressort de compression (9) est tendu et que la bielle (1) est poussée vers le haut.

2. Dispositif de serrage selon la revendication 1, **caractérisé en ce que** l'engrenage (17) présente des pignons à double rangée.

3. Dispositif de serrage selon la revendication 2, **caractérisé en ce que** les pignons à double rangée sont disposés en décalage mutuel.

4. Dispositif de serrage selon l'une des revendications précédentes, **caractérisé en ce que** l'engrenage (17) est monté au moyen d'un axe (21) dans la bielle (1).

5. Dispositif de serrage selon l'une des revendications précédentes, **caractérisé en ce que** la bielle (1) présente une fente centrale (16).

6. Dispositif de serrage selon l'une des revendications précédentes, **caractérisé en ce que** les pignons de l'engrenage (17) s'étendent à travers un évidement (18) sur le côté arrière de la bielle (1).

7. Dispositif de serrage selon l'une des revendications précédentes, **caractérisé en ce que** la partie de tête (3) de la bielle (1) est séparée par un autre ressort de compression (13).

8. Dispositif de serrage selon l'une des revendications précédentes, **caractérisé en ce que** la partie de tête (3) peut être bloquée au moyen d'un bouton tournant (11).

9. Dispositif de serrage selon l'une des revendications précédentes, **caractérisé en ce qu'**un embout (5) est installé à l'extrémité de tête du ressort de compression (9).

10. Dispositif de serrage selon l'une des revendications précédentes, **caractérisé en ce que** le levier pivotant (19) peut être bloqué au moyen d'un coulisseau de verrouillage (15).

11. Dispositif de serrage selon l'une des revendications précédentes, **caractérisé en ce que** le profilé de guidage est une rainure de guidage d'un profilé en aluminium.

12. Colonne d'alimentation ou colonne de raccordement pour approvisionner des bureaux et autres locaux en branchements et appareils destinés à de l'énergie électrique, des télécommunications et/ou des données, comprenant un corps ainsi que des branchements et/ou des appareils destinés à de l'énergie électrique, des télécommunications et/ou des données, comprenant un dispositif de serrage selon l'une des revendications 1 à 11.
